# EUROPEAN PATENT APPLICATION

(11) **EP 2 330 495 A2**
(43) Date of publication of application: **08.06.2011**
(21) Application number: 10190508.1
(22) Date of filing: 09.11.2010
(51) Int. Cl.: G06F 3/042

(54) **Improvements in or relating to optical navigation devices**

(30) Priority: 11.11.2009 GB 0919731
(71) Applicant: STMicroelectronics (Research & Development) Limited, Marlow, Buckinghamshire SL7 1YL (GB)
(72) Inventor: Reigneau, Mathieu, 45200, Amilly (FR)
(74) Representative: Hayden, Nicholas Mark

(57) **Abstract**

Disclosed herein is an optical navigation device, such as that used on a computer or mobile communications device. It comprises a radiation source capable of producing a beam of radiation; a sensor for receiving an image; and an optical element for identifying movement of an elastic object on a first surface to thereby enable a control action to be carried out, wherein said device further comprises means for determining the relative pressure on said first surface by said elastic object based upon the value of an optical parameter, such as the average radiation intensity, of said image received at the sensor. Said device may be arranged to operate as a push button or a linear pressure sensor.

## Description

The present invention relates to improvements in or relating to optical navigation devices, particularly but not exclusively in respect to miniature devices for use in a variety of different applications.

Current mobile or computer devices use a variety of different navigation mechanisms. Some of these present a mousing surface for direct manipulation by a finger (or other part of the body), and work by producing images of the finger as it moves on the mousing surface, translating this finger movement to movement of a cursor (for example) on a screen. In this respect a navigation device of this type works in a similar fashion to an optical mouse, and is referred to as an optical navigation device.

Most finger navigation devices use a mechanical push button system or a piezobuffer sensor to detect pressure. These systems are expensive, not always reliable and take additional place into a navigation module.

Furthermore optical navigation devices such as those described above cannot detect pressure, requiring additional components for detection of additional actions. It is often desirable to obtain pressure information without adding any other components.

It is an object of the invention to address one or more of the above issues.

In a first aspect of the invention there is provided an optical navigation device comprising
- a radiation source capable of producing a beam of radiation;
- a sensor for receiving an image; and
- an optical element for identifying movement of an elastic object on a first surface to thereby enable a control action to be carried out, said first surface being such that a whole of the imaged area of said first surface is substantially covered by said elastic object in normal use;
wherein said device further comprises means for determining the relative pressure applied to said first surface by said elastic object based upon the value of the average radiation intensity of said image received at the sensor.

The device may be operable such that pressure is a function of decreasing radiation intensity levels of said image received at the sensor.

Said optical navigation device may be operable to produce a stepwise pressure related output comprising of two or more states.

Said optical navigation device may be operable to mimic a push switch such that, should said optical parameter be on a first side of a predetermined threshold level then said device is operable to output a state mimicking a switch in its open state and should said optical parameter be on a second side of said predetermined threshold level then said device is operable to output a state mimicking a switch in its closed state. Ideally the side of the threshold level on which said device operates to output a state mimicking a switch in its closed state, is the side representative of a higher pressure being applied to said first surface.

There may be a plurality of threshold levels, wherein a different state is output depending on which threshold levels said value of said optical parameter falls between.

Said optical navigation device may be operable as an analogue pressure sensor, by producing a linear pressure related output corresponding to said pressure applied to said first surface.

Said optical element may be operable to have the whole or a large part of said first surface substantially covered in normal use. In one embodiment, said elastic object is a finger, said first surface having an area of comparable size or smaller than that of an average fingertip. Said imaged area may be of the order of magnitude of 1 mm²

Said navigation device may be packaged using Through Silicon Via technology. Said navigation device may be solderable using reflow solder techniques and therefore be able to withstand the high temperature of the reflow soldering process.

Said optical element may be formed from a single piece construction and may include at least one frustrated total internal reflection (F-TIR) surface capable of causing frustrated total internal reflection of the beam of radiation when said elastic object contacts said first surface to thereby generate the image which is capable of being translated into said control action. The optical element may comprise at least one further surface for directing radiation from the radiation source to at least one F-TIR surface. The optical element may comprise at least one additional surface for directing radiation from the F-TIR surface to the sensor.

The optical element may be formed from a plastics material, such as PMMA or polycarbonate.

In a further aspect of the invention there is provided a computer apparatus or a portable communications apparatus incorporating the navigation device herein described.

### BRIEF DESCRIPTION OF THE DRAWINGS

Embodiments of the invention will now be described, by way of example only, by reference to the accompanying drawings, in which:
Figure 1 is a cross-sectional diagram of an optical navigation device, suitable for application of the present invention, given by way of example,
Figure 2 is an optical diagram of the figure 1 device, given by way of example,
Figure 3 illustrates the concept that average intensity on the sensor correlates to the pressure applied;
Figure 4 illustrates the difference in images obtained from a number of people, firstly when mousing and secondly when mimicking pressing a button; and
Figure 5 shows a two-sided plot illustrating how the threshold level may be set to mimic the pushing of a button.

### DETAILED DESCRIPTION OF THE EMBODIMENTS

The present invention relates to an optical navigation device module for use in a device. The device may be of any appropriate type and may include mobile phones, PDAs, Laptop computers, TV remotes, games controls and other such devices herein referred to as a computer application.

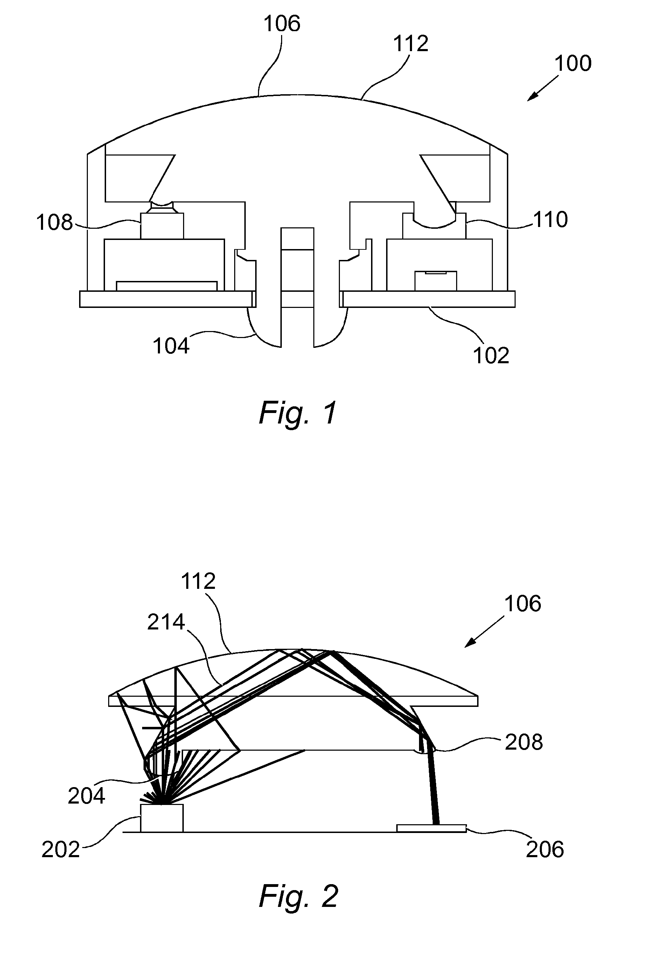

Figures 1 and 2 show a particular type of optical navigation device module suitable for the application of the present invention. This optical navigation device module is described in detail in co-pending application number GB0908899.8. It should be noted that this optical navigation device is described by way of example only, and any suitable optical navigation device using reflection or scattering off a mousing surface can be used.

The optical navigation device module 100 includes a base plate 102, an optical element 106 which incorporates a clip 104 (the optical element will be described in greater detail below), an illumination source 108, such as an LED, and a sensor 110. The overall construction of the optical navigation device module 100 is of a low profile construction making it suitable for mobile devices. The actual size of the overall package containing the optical navigation device sits under a cap of about 7mm in diameter and the module itself has a maximum dimension of about 5.8 mm.

The optical element 106 may be molded from a single piece of plastic and provides a so called mousing surface 112. An example of the type of plastic material is a monolithic optical block made of a plastics material such as poly (methyl methacrylate) also known as PMMA; although it will be appreciated other materials (such as Polycarbonate, Cyclophane copolymer) may alternatively be used.

As can be seen in Figure 2, this particular type of optical navigation device 106 uses the optical layout for a frustrated total internal reflection (F-TIR) device 106, although direct imaging systems and other systems are equally applicable to be used in place of the F-TIR device 106.

The F-TIR device 106 includes an LED 202 which emits a source of radiation directed by optical element 204 to the internal surface of the mousing surface 112. A further optical element 208 then directs any reflected radiation from surface on to sensor 206.

The LED 202 may be of any appropriate type and may be mounted on a substrate. In a particular example the LED emits in the near infrared range for example between about 700 to 900 nm. It should be noted that the radiation emitted by the LED may be any appropriate wavelength. If the radiation is in the UV, optical or IR ranges the radiation may be referred to as illumination.

The optical element 204 directs the LED illumination into the monolithic optical block which forms the optical element 106. The optical element 204 may be in any appropriate to form for example a single convex surface; a series of lenslets configured as a "fly eye" structure; or any other suitable structure capable of providing near collimated illumination at the internal surface. The optical element 204 may be capable of being tilted in order to control the illumination pattern and direction of the beam at the mousing surface.

The mousing surface 112 includes an internal surface and an external surface. At the mousing surface any object with a refractive index which is placed in contact with the external surface will frustrate the total internal reflection of the beams 214 at the internal surface. A suitable object may include a finger, pointer, hand or other object or feature. A so-called frustrated reflection will thus be generated and the resulting pattern is focused by optical element 208 onto the sensor 206. The mousing surface 112 is designed here to be smaller than the object manipulating it such that the object covers most of all of the mousing surface, in use. In a main embodiment the surface is smaller in area than a fingertip, and is designed for finger manipulation.

The internal surface is relatively smooth when compared to the features which give rise to the F-TIR. Illumination reflected from the internal surface when there is no object close to the mousing surface is virtually 100% reflected. However, when the reflection is frustrated only about 10% or less of the illumination is reflected, thus resulting in contrast ratio of about 1:10 in the present example. Note that at 850 nm most of returned signal is from scattering at the object in contact with the optical element 106 (e.g. the skin of the user's finger).

The optical element 208 may be of any appropriate form, for example a single convex surface; and includes a stop (not shown) so that an image of F-TIR surface is produced at the sensor.

The frustrated reflection directed on to the sensor is detected in order to identify the point or points of contact of the object in contact with the external surface. Subsequent measurements of the point or points of contact will provide information corresponding to the movement of object on the external surface. The action or movement of the object can then be translated into actions to operate a mobile personal computer.

The system works at a frame rate of 1 to 10 kHz in order to detect relative movement or movements of one or more features at the F-TIR. The features detected at the F-TIR are features between about 0.5mm and 30µm in size and correspond, for example, to finger print features of a user. The smaller features provide a greater ability to detect motion than the larger ones. The sensor operates to determine motion vectors of one or more features from one frame to the next in accordance with the frame rate. Correlation from one frame to the next identifies the motion vectors and rate of movement which can then be translated into an appropriate control action for the mobile computer.

The frame rate is set by the refresh rate of the sensor. The exposure may be achieved by a pulsating illumination source (LED) or by sampling the sensor output at the required rate.

It may be possible to calibrate the sensor by determining the sensor illumination when there is no radiation source for F-TIR and comparing this with the sensor, when detecting F-TIR. This calibration may occur at the start of each use of the optical navigation device or on a frame to frame basis.

Such devices usually require a switch or selector to allow the user to select the object pointed to, for example the button(s) on a mouse. For a device as described, such a button may be provided separately. This is undesirable as it causes the device to be difficult to use, and requires extra space on the host device. Alternatively, the button can be incorporated into the function of the device, for example, by having the optical element movable vertically so as to operate a mechanical switching device, such as a bubble switch, under or incorporated into the device. The problems with this latter solution include the additional height required and the additional cost in providing the switch. Furthermore, such a device cannot determine differences in pressure, and are susceptible to reliability issues as a mechanical switch must eventually wear out with repeated use. Piezoelectric switches are another alternative, and can also be made to detect pressure, but are expensive and still require extra space.

To help address these issues, the inventor has determined that, when using an elastic material such as a finger to operate an optical navigation device and where the finger operates directly on the mousing surface, the harder that the mousing surface is pressed, the larger the deformation of the ridges of the fingerprints.

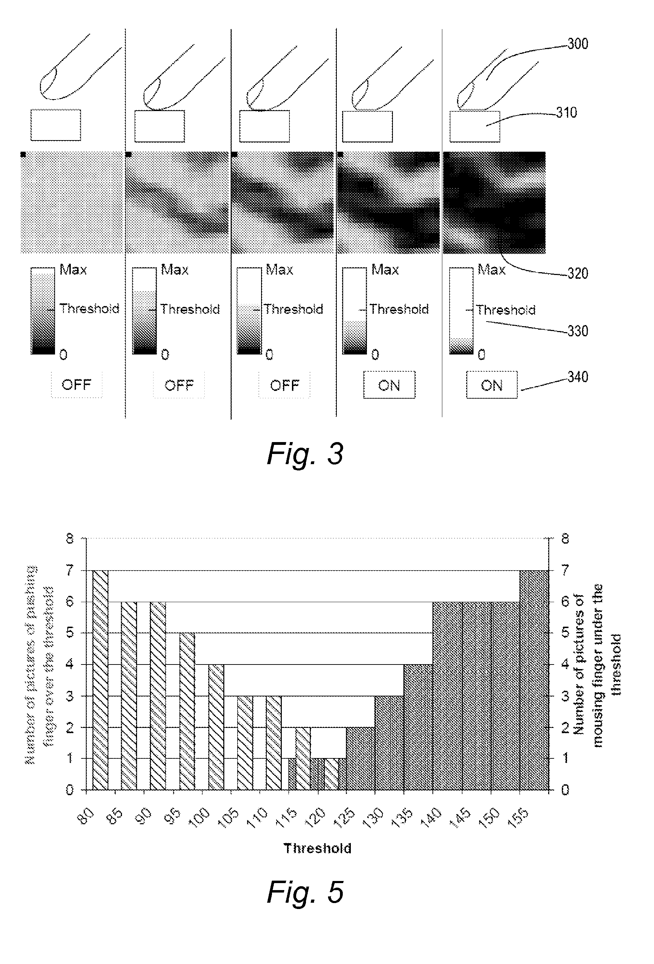

Figure 3 shows a finger 300 operating a navigation device 310 with 5 different pressures, the pressure increasing stepwise from left to right. Row 320 shows a detail of the finger image obtained by the navigation device. The image gets darker with pressure, as can be seen. Of course, for a navigation device using a direct imaging solution, the image would get brighter with increased pressure. This image darkening is as a result of the deformation of the user's fingerprint (particularly the ridges) with the measurements being made on a relatively small area of fingerprint, in the region of 1mmx1mm. This is in contrast to known touchscreen/touchpad systems. Some of these are able to detect pressure, but do so by detection of an increase in actual contact area on the screen/pad. This is only possible when the screen/pad is larger than the fingerprint.

Such known systems are only really capable of measuring light pressure and no more, with there being no further increase in contact area between light pressure and relatively heavy pressure. Light pressure in this context would equate to a force in the region of 0.1 N (equivalent to 500Pa pressure for a 1 cmx2cm finger). Normal mechanical switches require a typical activation force of 1N. Therefore such systems also could not be used effectively for mimicking push-button operation as described below.

The next row 330 shows the average intensity on the sensor, which in the first three examples is over a threshold, while in the last two examples, has fallen below this threshold. The final row 340 shows a "push button status". This is explained below.

In a simplest application, this concept can be used to implement a push button functionality to an optical navigation device such as that described above. As can be seen in the last two rows 330, 340 of Figure 3, a threshold level can be set for the average intensity so as to implement this functionality. The threshold level is set such that a light image, that is an image with an average intensity above the threshold, this indicating a light pressure such as that applied during normal mousing, results in a switch "off" state (button not pressed) while a dark image, having an average intensity below the threshold, this indicating a heavier pressure applied such as in button pressing, results in a switch "on" state (button pressed). Therefore by measuring the intensity of the image at the sensor, determining whether it is above or below a certain threshold and producing an appropriate output, it is possible to mimic the action of a mechanical push button switch.

A force in the region of 1 N (equivalent to 5kPa of pressure for 1cmx2cm finger) would be normally be enough to distort the ridges of most people and be detected by this method (greater pressure may be required for people with tougher skin, possibly 3N or more). This makes this method of pressure detection particularly suited to mimicking the actions of a push button, compared to the touchpad/touchscreen examples described above.

A navigation device which has a selection functionality without the need for a mechanical switch or piezoelectric element is therefore possible. Consequently, the navigation device can be made even smaller, without the need for vertical travel required for a conventional switch, and with a much simpler construction. Consequently such a device could be made reflowable (connectable through reflow soldering) using "Through Wafer Via" (TWV) integrated packaging techniques. Reflow soldering is a common process in the production of electronic devices. It consists in soldering all the components at the same time by heating these generally in an oven at around 260°C.

The threshold level could be adjusted to adapt the device to the user, depending on user's strength, fingerprint size, finger greasiness, skin colour or other factors. However it might be possible to fix a threshold allowing any user to activate the pressure sensor without needing to press too hard on the navigation device.

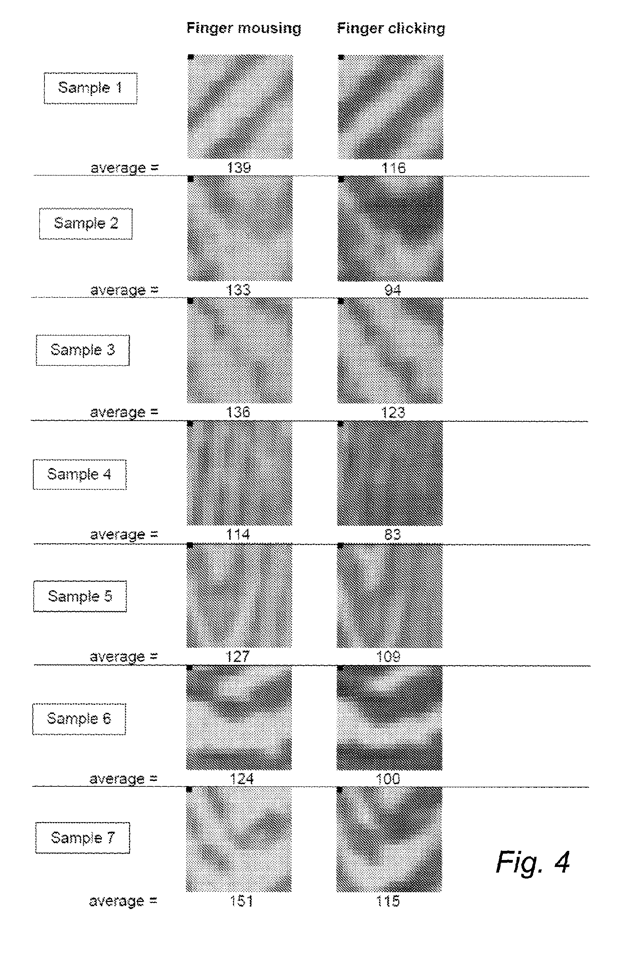

Figure 4 shows the results of an experiment whereby fingerprint pictures of several people using an optical assembly reproducing the principle of the F-TIR optical mouse were taken. In each case they were asked to first move a finger on the assembly as they would do on a touchpad (first column), and then to push on the device as if they were clicking on a button (second column). The average intensity has been calculated with a Matlab program converting the pictures to a matrix, and averaging all the values of that matrix. The value on a pixel is comprised between 0 and 255.

Figure 5 is a graph drawn from the average values, which illustrates how many cases are not correctly determined according to the threshold defined. The graph shows the number of images resultant from those, when mimicking the pushing of a button, applied a pressure over the threshold (striped thin bars) and the number of images resultant from those, when mousing normally, applied a pressure under the threshold (shaded thick bars), in both cases plotted against the threshold value. From this graph it can be determined that by fixing the threshold at 120, only 2 pictures are not correctly considered. However, it is a lot easier for the user to press harder than to press softer when mousing. Therefore a threshold at set 110 may be chosen, which results in only 3 cases of people who would be required to push the button a bit harder than they would normally.

Of course, it is easy to change such a threshold. Therefore it is simple to image several predefined set-ups to match with people who prefer a soft or a tough action on the navigation device.

It should also be noted that a device according to the invention, in an embodiment, can be used as an analogue pressure sensor, instead of just a simple switch. There is good evidence that the pressure applied to the device is directly proportional to the average intensity measured. Therefore an average intensity scale can be set to determine pressure applied. This may find applications on 3-D mousing and navigation, or to control scrolling speeds, for example

Equally, instead of a linear scale, two or three thresholds may be set. One example of this may be to mimic a PC mouse, which conventionally has two buttons. In this embodiment there may be two thresholds, the device being operable such that pressure below a first threshold does not activate a button, but allows mousing (as before), a pressure between the two thresholds indicates the pressing of a first button, or a "soft press", and a pressure over the second threshold indicates the pressing of a second button, or a "hard press".

The above embodiments are for illustration only and other embodiments and variations are possible and envisaged without departing from the spirit and scope of the invention.

## Claims

1. An optical navigation device comprising
- a radiation source capable of producing a beam of radiation;
- a sensor for receiving an image; and
- an optical element for identifying movement of an elastic object on a first surface to thereby enable a control action to be carried out, said first surface being such that a whole of the imaged area of said first surface is substantially covered by said elastic object in normal use;
wherein said device further comprises means for determining the relative pressure applied to said first surface by said elastic object based upon a value related to radiation intensity of said image received at the sensor.

2. An optical navigation device as claimed in any preceding claim wherein said imaged area is of the order of magnitude of 1 mm²

3. An optical navigation device as claimed in any preceding claim being operable to produce a stepwise pressure related output comprising of two or more states.

4. An optical navigation device as claimed in any preceding claim being operable to mimic a push button switch such that, should said optical parameter be on a first side of a predetermined threshold level then said device is operable to output a state mimicking a switch in its open state and should said optical parameter be on a second side of said predetermined threshold level then said device is operable to output a state mimicking a switch in its closed state.

5. An optical navigation device as claimed in any preceding claim wherein the side of the threshold level on which said device operates to output a state mimicking a switch in its closed state, is the side representative of a higher pressure being applied to said first surface, said higher pressure being greater than that required to apply a force of 0.5N on said first surface.

6. An optical navigation device as claimed in claim 5 wherein said threshold level is, or levels are, adjustable to adapt the device to the user.

7. An optical navigation device as claimed in claim 5 wherein value related to radiation intensity comprises the average radiation intensity of said image received at the sensor.

8. An optical navigation device as claimed in any preceding claim being operable as an analogue pressure sensor by producing a linear pressure related output corresponding to said pressure applied to said first surface.

9. An optical navigation device as claimed in any preceding claim wherein said optical element is operable to have the whole or a large part of said first surface substantially covered in normal use.

10. An optical navigation device as claimed in any preceding claim packaged using Through Silicon Via technology.

11. An optical navigation device as claimed in claim 10 being solderable using reflow solder techniques.

12. An optical navigation device as claimed in any preceding claim wherein said optical element is formed from a single piece construction

13. An optical navigation device as claimed in any preceding claim wherein said optical element comprising at least one frustrated total internal reflection (F-TIR) surface capable of causing frustrated total internal reflection of the beam of radiation when said elastic object contacts said first surface to thereby generate the image which is capable of being translated into said control action, said image being generated from radiation which is totally internally reflected at the the F-TIR surface

14. An optical navigation device as claimed in claim 13 wherein the optical element comprises at least one further surface for directing radiation from the radiation source to at least one F-TIR surface, the at least one further surface and the F-TIR surface being angled with respect to each other; wherein the optical element comprises at least one additional surface for directing radiation from the F-TIR surface to the sensor the at least one additional surface and the F-TIR surface being angled with respect to each other, and
wherein the radiation measured at the sensor is radiation which is totally internally reflected at the at least one further surface, the F-TIR surface and the at least one additional surface.

15. An optical navigation device as claimed in any preceding claim wherein the optical element is formed from a plastics material, such as PMMA or polycarbonate.

16. A computer apparatus incorporating an optical navigation device as claimed in any of claims 1 to 15.

17. A portable communications apparatus incorporating an optical navigation device as claimed in any of claims 1 to 15.

18. A remote control handset apparatus incorporating an optical navigation device as claimed in any of claims 1 to 15.
